# EUROPEAN PATENT APPLICATION

(11) **EP 4 807 961 A1**
(43) Date of publication of application: **16.09.2026**
(21) Application number: 25219085.5
(22) Date of filing: 27.11.2025
(51) Int. Cl.: H02M 1/32, H02M 1/36

(54) **SOFT-STARTING CIRCUIT, POWER CONVERTER, METHOD FOR CONTROLLING SOFT-STARTING CIRCUIT, CONTROL APPARATUS AND COMPUTER-READABLE STORAGE MEDIUM**

(30) Priority: 14.03.2025 CN 202510315688
(71) Applicant: Sungrow Power Supply Co., Ltd., Hefei, Anhui 230088 (CN)
(72) Inventor: QIAN, Yuandong, 230088 Hefei, Anhui (CN); LIANG, Cheng, 230088 Hefei, Anhui (CN); LI, He, 230088 Hefei, Anhui (CN); DONG, Lei, 230088 Hefei, Anhui (CN); TIAN, Ran, 230088 Hefei, Anhui (CN)
(74) Representative: Biallo, Dario

(57) **Abstract**

Disclosed are a soft-starting circuit, a power converter, a method for controlling a soft-starting circuit, a control apparatus, and a computer-readable storage medium. The soft-starting circuit includes a controller, a switching circuit, and at least two resistors. The at least two resistors are connected in series with each other in a circuit loop. The switching circuit includes at least two switches for bypassing a corresponding resistor of the at least two resistors respectively. The controller is configured to drive at least one of the at least two switches to be alternately turned on and off. In the present disclosure, a switch is drived to be alternately turned on and off through a pulsed control signal, such that a resistor corresponding to the switch is electrically connected in the circuit loop dynamically, thereby suppressing an inrush current in the circuit loop and protecting the resistor from being damaged.

## Description

### FIELD

The present disclosure relates to the technical field of power electronics, and in particular to a soft-starting circuit, a power converter, a method for controlling a soft-starting circuit, a control apparatus, and a computer-readable storage medium.

### BACKGROUND

During a power-on process, especially in a process of charging a load by a power supply, a large inrush current may exist. Therefore, to suppress the inrush current, a soft-starting circuit is typically provided at an input end of the power supply. The soft-starting circuit typically includes a switching circuit and resistors. Initially, all the resistors are electrically connected in a circuit loop to suppress the inrush current. As time increases, all the resistors are gradually bypassed by the switching circuit, to disconnect the resistors electrically from the circuit loop. Thereby, a soft-starting process is completed.

However, in a process of bypassing a resistor based on the above soft-starting technology, a certain resistor may be subjected to a large inrush current that exceeds a corresponding safety parameter, resulting in a failed soft start.

### SUMMARY

In view of this, a soft-starting circuit, a power converter, a method for controlling a soft-starting circuit, a control apparatus, and a computer-readable storage medium are provided according to embodiments of the present disclosure, which can ensure the safe operation of resistors in the soft-starting circuit and achieve a successful soft start.

A soft-starting circuit is provided according to an embodiment of the present disclosure. The soft-starting circuit includes: a controller, a switching circuit, and at least two resistors. The at least two resistors are connected in series with each other in a circuit loop. The switching circuit includes at least two switches for bypassing a corresponding resistor of the at least two resistors respectively. The controller is configured to drive at least one of the at least two switches to be alternately turned on and off.

In an embodiment, the switching circuit includes a first switch and a second switch, and the at least two resistors include a first resistor and a second resistor. The first resistor and the second resistor are connected in series with each other in the circuit loop. The first switch is connected in parallel with a branch formed by the first resistor and the second resistor connected in series, and the second switch is connected in parallel with the second resistor.

In an embodiment, the switching circuit includes a first switch and a second switch, and the at least two resistors include a first resistor and a second resistor. The first resistor and the second resistor are connected in series with each other in the circuit loop. The first switch is connected in parallel with the first resistor, and the second switch is connected in parallel with the second resistor.

In an embodiment, the controller is configured to control the second switch to be always on, and to control the first switch to be alternately turned on and off with a driving signal that has a variable or fixed duty cycle.

Alternatively, the controller is configured to control the second switch to be always off, and to control the first switch to be alternately turned on and off with a driving signal that has a variable or fixed duty cycle.

In an embodiment, the controller is configured to control the first switch to be always off, and to control the second switch to be alternately turned on and off with a driving signal that has a variable or fixed duty cycle.

In an embodiment, the controller is configured to control the first switch to be always on, and to control the second switch to be alternately turned on and off with a driving signal that has a variable or fixed duty cycle.

Alternatively, the controller is configured to control the first switch to be always off, and to control the second switch to be alternately turned on and off with a driving signal that has a variable or fixed duty cycle.

In an embodiment, the controller is further configured to control all the switches in the switching circuit to bypass all the resistors in response to a current passing through the circuit loop being less than a threshold.

In an embodiment, the soft-starting circuit further includes a start switch.

The start switch is connected in series to the circuit loop, and the controller is further configured to control the start switch to be closed before driving at least one of the at least two switches to be alternately turned on and off.

A power converter is further provided according to an embodiment of the present disclosure. The power converter includes the soft-starting circuit described above.

A method for controlling a soft-starting circuit is further provided according to an embodiment of the present disclosure. The soft-starting circuit includes a switching circuit and at least two resistors. The at least two resistors are connected in series with each other in a circuit loop. The switching circuit includes at least two switches for bypassing a corresponding resistor of the at least two resistors respectively. The method includes: driving at least one of the at least two switches to be alternately turned on and off.

In an embodiment, the switching circuit includes a first switch and a second switch, and the at least two resistors include a first resistor and a second resistor. The first resistor and the second resistor are connected in series with each other in the circuit loop. The first switch is connected in parallel with a branch formed by the first resistor and the second resistor connected in series, and the second switch is connected in parallel with the second resistor.

The driving at least one of the at least two switches to be alternately turned on and off includes:
controlling the second switch to be always on, and controlling the first switch to be alternately turned on and off with a driving signal that has a variable or fixed duty cycle, or
controlling the second switch to be always off, and controlling the first switch to be alternately turned on and off with a driving signal that has a variable or fixed duty cycle, or
controlling the first switch to be always off, and controlling the second switch to be alternately turned on and off with a driving signal that has a variable or fixed duty cycle.

In an embodiment, the switching circuit includes a first switch and a second switch, and the at least two resistors include a first resistor and a second resistor. The first resistor and the second resistor are connected in series with each other in the circuit loop. The first switch is connected in parallel with the first resistor, and the second switch is connected in parallel with the second resistor.

The driving at least one of the at least two switches to be alternately turned on and off includes:
controlling the second switch to be always on, and controlling the first switch to be alternately turned on and off with a driving signal that has a variable or fixed duty cycle, or
controlling the second switch to be always off, and controlling the first switch to be alternately turned on and off with a driving signal that has a variable or fixed duty cycle, or
controlling the first switch to be always on, and controlling the second switch to be alternately turned on and off with a driving signal that has a variable or fixed duty cycle, or
controlling the first switch to be always off, and controlling the second switch to be alternately turned on and off with a driving signal that has a variable or fixed duty cycle.

In an embodiment, the method further includes: controlling all the switches in the switching circuit to bypass all the resistors in response to a current passing through the circuit loop being less than a threshold.

A control apparatus is further provided according to an embodiment of the present disclosure. The control apparatus includes a processor and a memory. The memory stores a program, instructions or codes. The processor is configured to execute the program, the instructions or the codes stored in the memory, to implement the method described above.

A computer-readable storage medium is provided according to an embodiment of the present disclosure. The computer-readable storage medium stores a computer program. The computer program is loaded and executed by a processor to implement the method described above.

According to the soft-starting circuit provided in an embodiment of the present disclosure, when a soft-starting process is performed, instead of directly controlling a switch to bypass a resistor corresponding to the switch, the controller drives the switch to be alternately turned on and off through a pulsed control signal, such that the corresponding resistor is electrically connected in the circuit loop dynamically, thereby suppressing an inrush current in the circuit loop and protecting the resistor from being damaged. For example, when a switch is turned on, a peak of the inrush current has not occurred. At this time, if the switch is controlled to be turned off, the inrush current will be reduced, thereby reducing the peak of the inrush current.

### BRIEF DESCRIPTION OF THE DRAWINGS

FIG. 1 is a schematic diagram of a soft-starting circuit according to an embodiment of the present disclosure;
FIG. 2 is a circuit diagram of a soft-starting circuit according to an embodiment of the present disclosure;
FIG. 3 is a circuit diagram of a soft-starting circuit according to another embodiment of the present disclosure;
FIG. 4 is a schematic diagram illustrating a variable duty cycle of a driving signal for a first switch T1 according to an embodiment of the present disclosure;
FIG. 5 is a circuit diagram of a soft-starting circuit according to another embodiment of the present disclosure;
FIG. 6 is a circuit diagram of a soft-starting circuit according to another embodiment of the present disclosure; and
FIG. 7 is a schematic diagram of a control apparatus according to an embodiment of the present disclosure.

### DETAILED DESCRIPTION

In order to make the above objectives, features and advantages of the present disclosure more apparent and understandable, the embodiments of the present disclosure are described in detail below in conjunction with the drawings and the embodiments.

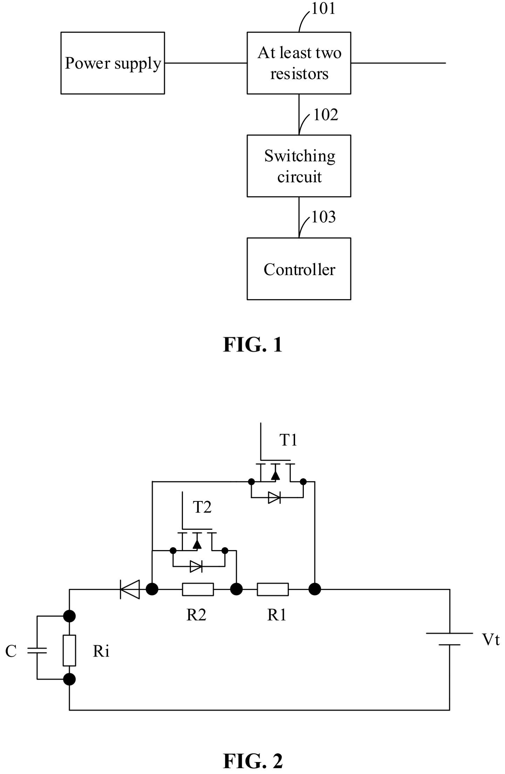

Reference is made to FIG. 1, which is a schematic diagram of a soft-starting circuit according to an embodiment of the present disclosure.

The soft-starting circuit according to the embodiment of the present disclosure includes: a controller 103, a switching circuit 102, and at least two resistors 101. The at least two resistors 101 are connected in series with each other in a circuit loop. It should be understood that more resistors connected in series in the circuit loop lead to greater impedance of the circuit loop and smaller current flowing through the circuit loop. The at least two resistors 101 are connected in series with each other to form a branch, one end of the branch is used for connecting a power supply, and the other end of the branch is used for charging a load or supplying power to the load. The form of the power supply is not limited in the present disclosure. The power supply is a general term used herein, and may be an actual power supply or an output end of a previous circuit stage.

The switching circuit 102 includes at least two switches for bypassing a corresponding resistor of the at least two resistors respectively. That is, when a switch in the switching circuit 102 is turned on, the power supply can power or charge the load through the switch that bypasses at least one corresponding resistor, which can reduce the impedance of the circuit loop.

The controller 103 is configured to drive at least one of the at least two switches to be alternately turned on and off.

According to the soft-starting circuit provided in the embodiment of the present disclosure, when a soft-starting process is performed, instead of directly controlling a switch to bypass a resistor corresponding to the switch, the controller drives the switch to be alternately turned on and off through a pulsed control signal, such that the corresponding resistor is electrically connected in the circuit loop dynamically, thereby suppressing an inrush current in the circuit loop and protecting the resistor from being damaged. For example, when a switch is turned on, a peak of the inrush current has not occurred. At this time, if the switch is controlled to be turned off, the inrush current will be reduced, thereby reducing the peak of the inrush current.

The specific implementation of the soft-starting circuit is not limited in the embodiments of the present disclosure. The soft-starting circuit may include multiple resistors and multiple switches. For convenience of the description, taking the soft-starting circuit with two switches and two resistors as an example, description is given below with reference to the drawings. The soft-starting circuit may also include more resistors and switches.

Reference is made to FIG. 2, which is a circuit diagram of a soft-starting circuit according to an embodiment of the present disclosure.

In the soft-starting circuit according to the embodiment of the present disclosure, the switching circuit includes a first switch T1 and a second switch T2, and the at least two resistors include a first resistor R1 and a second resistor R2.

The first resistor R1 and the second resistor R2 are connected in series with each other in a circuit loop. One end of a branch formed by the serially connected first resistor R1 and second resistor R2 is used for connecting a power supply Vt, and the other end of the branch is used for connecting a load. Ri represents an internal resistance of the load, and the load is connected in parallel with a capacitor C. It should be understood that the type of the load is not limited in the present disclosure. The load may be any type of load that requires power from the power supply to operate. To block a reverse current flowing through the circuit loop, a diode is connected in series to the circuit loop. An anode of the diode is connected to the second resistor R2, and a cathode of the diode is connected to the load.

The first switch T1 is connected in parallel with the branch formed by the first resistor R1 and the second resistor R2 connected in series. The second switch T2 is connected in parallel with the second resistor R2.

A magnitude relationship between resistances of the first resistor R1 and the second resistor R2 is not limited in the present disclosure. For example, when a withstand voltage of the first switch T1 is the same as that of the second switch T2, the resistance of the first resistor R1 may be selected to be smaller than that of the second resistor R2.

The types of the first switch T1 and the second switch T2 are not limited in the present disclosure. For example, metal-oxide-semiconductor field-effect transistors (MOSFET) may be employed as the switches.

Based on FIG. 2, when the second switch T2 is turned on, the second resistor R2 is bypassed by the second switch T2. When the first switch T1 is turned on, both the first resistor R1 and the second resistor R2 are bypassed by the first switch T1. If the second switch T2 is turned on first and then the first switch T1 is turned on, the first resistor R1 will be subjected to a large inrush current, which may exceed the safety parameter of the first resistor R1.

In order to prevent the first resistor R1 from being subjected to a large inrush current, the soft-starting circuit according to the embodiment of the present disclosure controls the first switch T1 to be alternately turned on and off, instead of directly controlling the first switch T1 to be turned on. Thereby, the inrush current flowing through the first resistor R1 is suppressed, no large peak of the inrush current occurs, and the first resistor R1 is protected from being damaged.

The manner in which the controller controls the switches to be alternately turned on and off is not limited in the embodiments of the present disclosure, and several possible implementations are described as follow.

In a first implementation, the controller is configured to control the second switch T2 to be always on, and to control the first switch T1 to be alternately turned on and off with a driving signal that has a variable or fixed duty cycle. That is, the second resistor R2 is bypassed, and the first resistor R1 is electrically connected to and disconnected from the circuit loop alternately due to the alternating on-off operation of the first switch T1, thereby reducing the inrush current.

In a second implementation, the controller is configured to control the second switch T2 to be always off, and to control the first switch T1 to be alternately turned on and off with a driving signal that has a variable or fixed duty cycle. That is, the first resistor R1 and the second resistor R2 are controlled through the first switch T1 to be electrically connected to and disconnected from the circuit loop alternately, thereby reducing the inrush current.

In a third implementation, the controller is configured to control the first switch T1 to be always off, and to control the second switch T2 to be alternately turned on and off with a driving signal that has a variable or fixed duty cycle. That is, the first resistor R1 is always electrically connected in the circuit loop, and the second resistor R2 is controlled through the second switch T2 to be electrically connected to and disconnected from the circuit loop alternately, thereby reducing the inrush current.

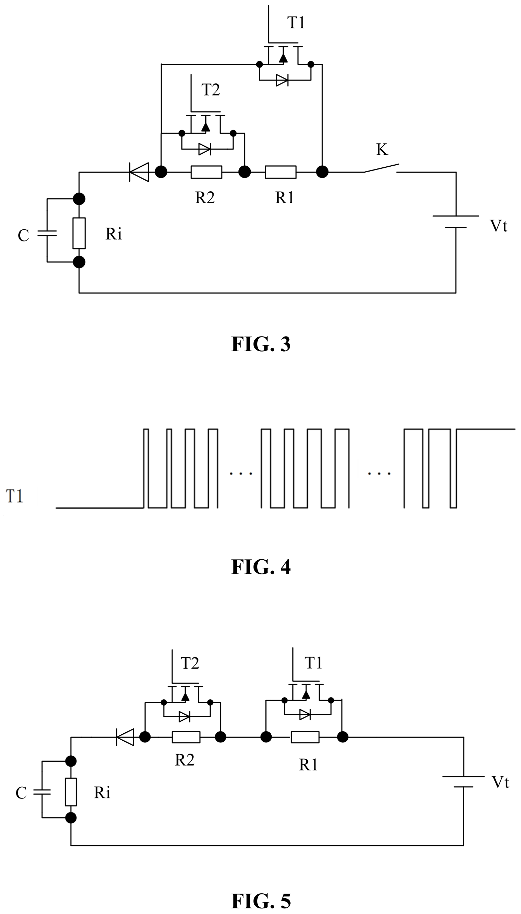

Reference is made to FIG. 3, which is a circuit diagram of a soft-starting circuit according to another embodiment of the present disclosure.

The soft-starting circuit according to the embodiment of the present disclosure further includes a start switch K.

The start switch K is connected in series to the circuit loop, and the controller is further configured to control the start switch K to be closed before driving at least one of the at least two switches to be alternately turned on and off.

For example, in an embodiment, the controller controls the start switch K to be closed, and thus the first resistor R1 and the second resistor R2 are both connected in the circuit loop. Then the second switch T2 is controlled to be turned on, and thus the second resistor R2 is bypassed by the second switch T2. And the first switch T1 is dynamically controlled to be turned on and off alternately.

The specific form of the driving signal for driving the switches by the controller is not limited in the embodiment of the present disclosure. The driving signal may have a fixed duty cycle or a variable duty cycle, and may be designed based on a specific application scenario. For example, as shown in FIG. 4, which is a schematic diagram illustrating a variable duty cycle of a driving signal for the first switch T1, the duty cycle exhibits a tendency to gradually increase, which is merely an example.

It should be understood that whether the first switch or the second switch performs the dynamic alternating on-off operation, when the current passing through the circuit loop is less than a threshold, all the switches in the switching circuit are controlled by the controller to bypass all the resistors. Thereby, the soft-starting process is completed and the resistors are prevented from continuing to consume power in the circuit loop.

The complete implementation process is described below in conjunction with the second implementation as described above.

Referring to FIG. 3, the controller controls the start switch K to be closed, and thus the second resistor R2 and the first resistor R1 are connected in series in the circuit loop. After a period of time (for example, when the current through the circuit loop falls below a certain value or a delay time has elapsed), the controller controls the second switch T2 to remain open. At this time, the controller controls the first switch T1 through a square wave signal with a variable duty cycle, that is, the first switch T1 is controlled to be alternately turned on and off. When the first switch T1 is turned off, the first resistor R1 and the second resistor R2 are both electrically connected in the circuit loop. When the first switch T1 is turned on, the first resistor R1 and the second resistor R2 are both bypassed by the first switch T1. After a period of time (for example, when the current through the circuit loop falls below a threshold), the controller controls the first switch T1 to be closed, and at this time, both the first resistor R1 and the second resistor R2 are electrically disconnected from the circuit loop. Thereby the soft-starting process is completed.

The above embodiments are introduced by taking an example that two series-connected resistors are included in the circuit loop. When more control stages are required, the number of series-connected resistors can be increased, along with a corresponding increase in the number of switches. The working principle for this implementation is similar, and thus is not repeated herein.

Another soft-starting circuit is described below with reference to the drawings.

Reference is made to FIG. 5, which is a circuit diagram of a soft-starting circuit according to another embodiment of the present disclosure.

In the soft-starting circuit according to the embodiment of the present disclosure, the switching circuit includes a first switch T1 and a second switch T2, and the at least two resistors include a first resistor R1 and a second resistor R2.

The first resistor R1 and the second resistor R2 are connected in series with each other in a circuit loop. One end of a branch formed by the serially connected first resistor R1 and second resistor R2 is used for connecting a power supply Vt, and the other end of the branch is used for connecting a load. Ri represents the internal resistance of the load, and the load is connected in parallel with a capacitor C. It should be understood that the type of the load is not limited in the present disclosure. The load may be any type of load that requires power from the power supply to operate. To block a reverse current flowing through the circuit loop, a diode is connected in series to the circuit loop. An anode of the diode is connected to the second resistor R2, and a cathode of the diode is connected to the load.

The first switch T1 is connected in parallel with the first resistor R1.

The second switch T2 is connected in parallel with the second resistor R2.

Based on FIG. 5, when the first switch T1 is turned on, the first resistor R1 is bypassed. When the second switch T2 is turned on, the second resistor R2 is bypassed.

Several control modes corresponding to FIG. 5 are described below.

In a first control mode, the controller controls the first switch T1 to be always on, and controls the second switch T2 to be alternately turned on and off with a driving signal that has a variable or fixed duty cycle. That is, the first resistor R1 is electrically disconnected from the circuit loop, and the second resistor R2 is controlled through the second switch T2 to be electrically connected to and disconnected from the circuit loop alternately, thereby regulating the current through the circuit loop dynamically to achieve a stable current.

In a second control mode, the controller controls the first switch T1 to be always off, and controls the second switch T2 to be alternately turned on and off with a driving signal that has a variable or fixed duty cycle. That is, the first resistor R1 is always electrically connected in the circuit loop, and the second resistor R2 is controlled through the second switch T2 to be electrically connected to and disconnected from the circuit loop alternately, thereby regulating the current through the circuit loop dynamically to achieve a stable current.

In a third control mode, the controller controls the second switch T2 to be always on, and controls the first switch T1 to be alternately turned on and off with a driving signal that has a variable or fixed duty cycle. That is, the second resistor R2 is electrically disconnected from the circuit loop, and the first resistor R1 is controlled through the first switch T1 to be electrically connected to and disconnected from the circuit loop alternately, thereby regulating the current through the circuit loop dynamically to achieve a stable current.

In a fourth control mode, the controller controls the second switch T2 to be always off, and controls the first switch T1 to be alternately turned on and off with a driving signal that has a variable or fixed duty cycle. That is, the second resistor R2 is always electrically connected in the circuit loop, and the first resistor R1 is controlled through the first switch T1 to be electrically connected to and disconnected from the circuit loop alternately, thereby regulating the current through the circuit loop dynamically to achieve a stable current.

In the soft-starting circuit shown in FIG. 5, the controller is also configured to control all the switches in the switching circuit to be always on when the current passing through the circuit loop is less than a threshold, to bypass all the resistors and save power consumption.

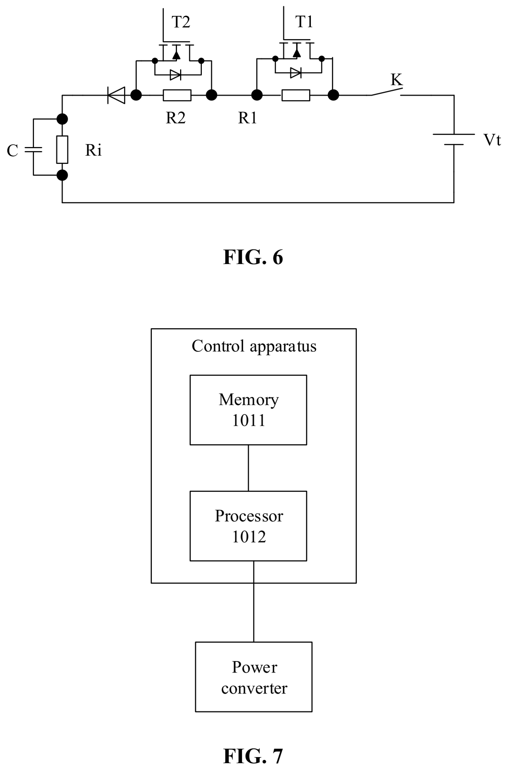

Reference is made to FIG. 6, which is a circuit diagram of a soft-starting circuit according to another embodiment of the present disclosure.

The soft-starting circuit according to the embodiment of the present disclosure further includes a start switch K.

The start switch K is connected in series to the circuit loop, and the controller is further configured to control the start switch K to be closed before driving at least one of the at least two switches to be alternately turned on and off, which is described above and is not repeated herein.

Based on the soft-starting circuits according to the above embodiments, a power converter is further provided according to an embodiment of the present disclosure. The type of the power converter is not limited in the present disclosure, and the soft-starting circuit is arranged in the power converter. For example, in an embodiment, the power converter is an inverter, and the inverter includes a potential induced degradation (PID) power supply.

The PID power supply provided in the embodiment of the present disclosure includes the soft-starting circuit described in the above embodiments. The type of the PID power supply is not limited in the present disclosure. The PID power supply may be a direct-current PID or an alternating-current PID. The soft-starting circuit can perform a soft-starting process in the PID power supply, to suppress the inrush current and protect the resistors in the soft-starting circuit.

Based on the soft-starting circuits according to the above embodiments, a method for controlling a soft-starting circuit is further provided according to an embodiment of the present disclosure, and is described in detail below.

In the method for controlling a soft-starting circuit according to the embodiment of the present disclosure, the soft-starting circuit includes a switching circuit and at least two resistors. The at least two resistors are connected in series with each other in a circuit loop. The switching circuit includes at least two switches for bypassing a corresponding resistor of the at least two resistors respectively.

The method includes:
driving at least one of the at least two switches to be alternately turned on and off.

Two soft-starting processes corresponding to two soft-starting circuits are described below.

The switching circuit in a first soft-starting circuit includes a first switch and a second switch, and the at least two resistors include a first resistor and a second resistor. The first resistor and the second resistor are connected in series with each other in a circuit loop. The first switch is connected in parallel with a branch formed by the first resistor and the second resistor connected in series, and the second switch is connected in parallel with the second resistor.

The driving at least one of the at least two switches to be alternately turned on and off includes:
controlling the second switch to be always on, and controlling the first switch to be alternately turned on and off with a driving signal that has a variable or fixed duty cycle, or
controlling the second switch to be always off, and controlling the first switch to be alternately turned on and off with a driving signal that has a variable or fixed duty cycle, or
controlling the first switch to be always off, and controlling the second switch to be alternately turned on and off with a driving signal that has a variable or fixed duty cycle.

The switching circuit in a second soft-starting circuit includes a first switch and a second switch, and the at least two resistors include a first resistor and a second resistor. The first resistor and the second resistor are connected in series with each other in a circuit loop. The first switch is connected in parallel with the first resistor, and the second switch is connected in parallel with the second resistor.

The driving at least one of the at least two switches to be alternately turned on and off includes:
controlling the second switch to be always on, and controlling the first switch to be alternately turned on and off with a driving signal that has a variable or fixed duty cycle, or
controlling the second switch to be always off, and controlling the first switch to be alternately turned on and off with a driving signal that has a variable or fixed duty cycle, or
controlling the first switch to be always on, and controlling the second switch to be alternately turned on and off with a driving signal that has a variable or fixed duty cycle, or
controlling the first switch to be always off, and controlling the second switch to be alternately turned on and off with a driving signal that has a variable or fixed duty cycle.

It should be understood that whether the first switch or the second switch performs the dynamic alternating on-off operation, when the current passing through the circuit loop is less than a threshold, all the switches in the switching circuit are controlled by the controller to bypass all the resistors. Thereby, the soft-starting process is completed and the resistors are prevented from continuing to consume power in the circuit loop.

Reference is made to FIG. 7, which is a schematic diagram of a control apparatus according to an embodiment of the present disclosure.

The control apparatus may include a memory 1011 and a processor 1012. The processor 1012 may be connected to a power converter, and may drive switches in various power conversion circuits in the power converter. The memory shown in FIG. 7 may be a random access memory (RAM), a flash memory, a read only memory (ROM), an EPROM memory, a non-volatile electronic programmable ROM (EPROM), a register, a hard disk, a removable disk, and the like.

The memory 1011 may store computer instructions. When executing the computer instructions, the processor 1012 implements the method for controlling the soft-starting circuit. The memory 1011 may further store data, for example, information such as the threshold mentioned in the above embodiments.

All or part of the above embodiments may be implemented by software, hardware, firmware or any combination thereof. When implemented by using software, all or part of the embodiments may be implemented in a form of a computer program product. The computer program product includes one or more computer instructions. When the computer program instructions are loaded and executed on a computer, all or part of the processes or functions according to the embodiments of the present disclosure are implemented. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired (such as a coaxial cable, a fiber, or a digital subscriber line (DSL)) or wireless (such as infrared, radio, or microwave) manner. The computer-readable storage medium may be any available medium capable of being accessed by a computer or may be a data storage device, such as a server and a data center, integrated by one or more available medium. The available medium may be a magnetic medium (such as a floppy disk, a hard disk, or a magnetic tape), a semiconductor medium (such as a solid state disk(SSD)), or the like.

A readable storage medium is further provided according to an embodiment of the present disclosure for storing the method according to the above embodiments. For example, the readable storage medium may be a random access memory (RAM), a flash memory, a read only memory (ROM), an EPROM memory, a non-volatile read-only electronic programmable memory (EPROM), a register, a hard disk, a removable disk, or any other form of storage medium in the art.

It should be noted that the embodiments in this specification are described in a progressive manner. Each of the embodiments focuses on differences from other embodiments, and the same or similar parts of the embodiments may be referred to each other.

The disclosed embodiments are described above, so that those skilled in the art can implement or use the present disclosure. Various modifications to these embodiments are apparent to those skilled in the art. The general principles defined herein may be implemented in other embodiments without departing from the spirit or scope of the present disclosure. Therefore, the present disclosure shall not be limited to the embodiments described herein, but have the widest scope that complies with the principle and novelty disclosed in this specification.

## Claims

1. A soft-starting circuit, **characterized by** comprising:
a controller (103);
a switching circuit (102); and
at least two resistors (101), wherein
the at least two resistors (101) are connected in series with each other in a circuit loop,
the switching circuit (102) comprises at least two switches for bypassing a corresponding resistor of the at least two resistors respectively, and
the controller (103) is configured to drive at least one of the at least two switches to be alternately turned on and off.

2. The soft-starting circuit according to claim 1, wherein the switching circuit (102) comprises a first switch (T1) and a second switch (T2), and the at least two resistors (101) comprise a first resistor (R1) and a second resistor (R2), and wherein
the first resistor (R1) and the second resistor (R2) are connected in series with each other in the circuit loop,
the first switch (T1) is connected in parallel with a branch formed by the first resistor (R1) and the second resistor (R2) connected in series, and
the second switch (T2) is connected in parallel with the second resistor (R2).

3. The soft-starting circuit according to claim 1, wherein the switching circuit (102) comprises a first switch (T1) and a second switch (T2), and the at least two resistors (101) comprise a first resistor (R1) and a second resistor (R2), and wherein
the first resistor (R1) and the second resistor (R2) are connected in series with each other in the circuit loop,
the first switch (T1) is connected in parallel with the first resistor (R1), and
the second switch (T2) is connected in parallel with the second resistor (R2).

4. The soft-starting circuit according to claim 2 or 3, wherein the controller (103) is configured to control the second switch (T2) to be always on, and to control the first switch (T1) to be alternately turned on and off with a driving signal that has a variable or fixed duty cycle, or
the controller (103) is configured to control the second switch (T2) to be always off, and to control the first switch (T1) to be alternately turned on and off with a driving signal that has a variable or fixed duty cycle.

5. The soft-starting circuit according to claim 2, wherein the controller (103) is configured to control the first switch (T1) to be always off, and to control the second switch (T2) to be alternately turned on and off with a driving signal that has a variable or fixed duty cycle.

6. The soft-starting circuit according to claim 3, wherein the controller (103) is configured to control the first switch (T1) to be always on, and to control the second switch (T2) to be alternately turned on and off with a driving signal that has a variable or fixed duty cycle, or
the controller (103) is configured to control the first switch (T1) to be always off, and to control the second switch (T2) to be alternately turned on and off with a driving signal that has a variable or fixed duty cycle.

7. The soft-starting circuit according to any one of claims 1 to 6, wherein the controller (103) is further configured to control all the switches (T1, T2) in the switching circuit (102) to bypass all the resistors (R1, R2) in response to a current passing through the circuit loop being less than a threshold.

8. The soft-starting circuit according to any one of claims 1 to 6, further comprising a start switch (K), wherein
the start switch (K) is connected in series to the circuit loop, and the controller (103) is further configured to control the start switch (K) to be closed before driving at least one of the at least two switches to be alternately turned on and off.

9. A power converter, **characterized by** comprising the soft-starting circuit according to any one of claims 1 to 8.

10. A method for controlling a soft-starting circuit, **characterized in that** the soft-starting circuit comprises a switching circuit and at least two resistors, the at least two resistors are connected in series with each other in a circuit loop, and the switching circuit comprises at least two switches for bypassing a corresponding resistor of the at least two resistors respectively, and wherein
the method comprises:
driving at least one of the at least two switches to be alternately turned on and off.

11. The method according to claim 10, wherein the switching circuit comprises a first switch and a second switch, the at least two resistors comprise a first resistor and a second resistor, the first resistor and the second resistor are connected in series with each other in the circuit loop, the first switch is connected in parallel with a branch formed by the first resistor and the second resistor connected in series, and the second switch is connected in parallel with the second resistor, and wherein
the driving at least one of the at least two switches to be alternately turned on and off comprises:
controlling the second switch to be always on, and controlling the first switch to be alternately turned on and off with a driving signal that has a variable or fixed duty cycle, or
controlling the second switch to be always off, and controlling the first switch to be alternately turned on and off with a driving signal that has a variable or fixed duty cycle, or
controlling the first switch to be always off, and controlling the second switch to be alternately turned on and off with a driving signal that has a variable or fixed duty cycle.

12. The method according to claim 10, wherein the switching circuit comprises a first switch and a second switch, the at least two resistors comprise a first resistor and a second resistor, the first resistor and the second resistor are connected in series with each other in the circuit loop, the first switch is connected in parallel with the first resistor, and the second switch is connected in parallel with the second resistor, and wherein
the driving at least one of the at least two switches to be alternately turned on and off comprises:
controlling the second switch to be always on, and controlling the first switch to be alternately turned on and off with a driving signal that has a variable or fixed duty cycle, or
controlling the second switch to be always off, and controlling the first switch to be alternately turned on and off with a driving signal that has a variable or fixed duty cycle, or
controlling the first switch to be always on, and controlling the second switch to be alternately turned on and off with a driving signal that has a variable or fixed duty cycle, or
controlling the first switch to be always off, and controlling the second switch to be alternately turned on and off with a driving signal that has a variable or fixed duty cycle.

13. The method according to any one of claims 10 to 12, further comprising: controlling all the switches in the switching circuit to bypass all the resistors in response to a current passing through the circuit loop being less than a threshold.

14. A control apparatus, comprising:
a processor; and
a memory, storing a program, instructions or codes, wherein
the processor is configured to execute the program, the instructions or the codes stored in the memory, to implement the method according to any one of claims 10 to 13.

15. A computer-readable storage medium, storing a computer program, wherein the computer program is loaded and executed by a processor to implement the method according to any one of claims 10 to 13.
